# EUROPÄISCHE PATENTANMELDUNG

(11) **EP 0 873 027 A2**
(43) Veröffentlichungstag der Anmeldung: **21.10.1998**
(21) Anmeldenummer: 98104970.3
(22) Anmeldetag: 19.03.1998
(51) Int. Cl.: H04Q 3/00, H04Q 7/32

(54) **Vorrichtung zur Herstellung von Telekommunikationsverbindungen**

(30) Priorität: 14.04.1997 DE 29706581 U
(71) Anmelder: Adelmeier, Holger, 99084 Erfurt (DE); Hellmuth, Klaus, 99084 Erfurt (DE)
(72) Erfinder: Adelmeier, Holger, 99084 Erfurt (DE); Hellmuth, Klaus, 99084 Erfurt (DE)
(74) Vertreter: Liedtke, Klaus, Dr.

(57) **Zusammenfassung**

Der Erfindung liegt die Aufgabe zugrunde, eine Vorrichtung anzugeben, die eine Verbindung zu unterschiedlichen Kommunikationsnetzen in der Weise erzeugt, daß die erhöhten Entgelte, die für den Übergang von einem Kommunikationsnetz zu einem anderen Kommunikationsnetz vermieden werden.

Erfindungsgemäß gelingt die Lösung der Aufgabe dadurch, daß in der Vorrichtung Schnittstelleneinheiten zur Herstellung der Verbindung mit den Kommunikations -Endeinrichtungen, Schnittstelleneinheiten zur Herstellung der Verbindungen zu verschiedenen Telekommunikations-Netzanschlüssen, eine Steuerung, die wählbare Kommunikations-Endeinrichtungen EE mit wählbaren Telekommunikations-Netzanschlüssen in beiden Richtungen verbindet und abgehende Verbindungen zu den jeweiligen Netzanschlüssen und ankommende Verbindungen zu den jeweiligen Endeinrichtungen weiterleitet angeordnet werden.

Die Erfindung betrifft eine Vorrichtung zur Herstellung einer Verbindung einer Kommunikations-Endeinrichtung mit mindestens einem Telekommunikations- netz.

## Beschreibung

Die Erfindung betrifft eine Vorrichtung zur Herstellung einer Verbindung einer Kommunikations-Endeinrichtung mit mindestens einem Telekommunikationsnetz.

Auf dem sich schnell weiterentwickelten Markt der Telekommunikation werden von verschiedenen Netzbetreibern Anschlußleitungen (Access) zu ihren Netzen angeboten, die wahlweise vom Nutzer verwendet werden können.

Im Stand der Technik sind hierzu Geräte bekannt, die wählbare Verbindungen zu verschiedenen Fest- und Mobilfunknetzen herstellen.

Nach DE 43 44 702.3 A1 ist ein Verfahren zum wechselweisen Betreiben eines mobilen Endgerätes über ein zellulares Mobilfunksystem und ein Schnurlossystem in einem Festnetz bekannt, bei dem jeder ankommende Anruf über das Vermittlungssystem eines zellularen Mobilfunksystems zu einem mobilen Endgerät weitergeleitet wird, wobei die Rufnummer des mobilen Endgerätes aus der Sicht des Anrufers betriebsartunabhängig eine zellulare Mobilfunkrufnummer ist, und wobei bei Nichterreichbarkeit des mobilen Endgerätes über das zellulare Mobilfunksystem im Vermittlungssystem des zellularen Mobilfunksystems ein Dienstemerkmal aktiviert wird, welches eine Rufweiterleitung des ankommenden Anrufs zu einer Schnurlos-Feststation des mobilen Endgerätes in einem Festnetz bewirkt und wobei die in diesem Dienstemerkmal gespeicherte und für die Rufweiterleitung aktivierte Rufnummer die Festnetzrufnummer der Schnurlos-Feststation des mobilen Endgerätes ist.
Bei diesem Verfahren wird die Telekommunikationsnetzauswahl aufgrund der bestehenden Feldstärkebedingungen durchgeführt. Eine direkte Netzauswahl ist damit nicht möglich.

Ferner ist in DE 296 01 887 U1 eine Vorrichtung für die Ermittlung der günstigsten Telekommunikatons-Verbindung bei Inlands- und Auslandsgesprächen beschrieben, bei der ein Vergleicher vorgesehen ist, in dem die Gebührendaten zweier oder mehrerer Betreiber verglichen werden, wobei die Optimierung zum Zeitpunkt der Wahl oder beim Wechsel eines Standorts erfolgt und Daten wie z.B. Netzbetreiber, Wochentag, Tageszeit, aktuelle Gebühren, Zugangsmöglichkeiten und wahrscheinliche Gesprächsdauer soweit vorhanden berücksichtigt werden.
Die Netzauswahl erfolgt hier mit Hilfe eines Vergleichers, der in der Vorrichtung hinterlegte Tabellen und Algorithmen auswertet und die Verbindung über einen Anschlußbetreiber zu den einzelnen Netzbetreibern herstellt.

In DE 44 00 832 A1 ist weiterhin ein Fernsprech-Endgerät mit Funkbetrieb angegeben, bei dem mehrere Funktionen gemeinsam oder in einer beliebigen Kombination in einem transportablen Gerät oder Geräteteil vereinigt sind. Bei den Funktionen handelt es sich um einen Funkanschluß zu einem stationären Gerät im Nahbereich für den Zugang zum drahtgebundenen Netz (schnurloses Telefon), einen Funkanschluß zu Überland-Funkstationen (Funktelefone) sowie um diese Funktionen jedoch mit Zwischenstation als Fest- und/oder Mobilstation.
Nachteilig ist hierbei, daß ein gesondertes Endgerät benötigt wird.

Mit den im Stand der Technik bekannten Vorrichtungen ist es möglich, daß bestimmte Verbindungen den Netzen direkt zugeschaltet werden.

Viele Anwender der Telekommunikationsdienstleistungen sind im Besitz von zwei oder mehr Anschlüssen (Mobilfunk und analoges und/oder digitales Festnetz) zu Netzbetreibern. Die Netzbetreiber selbst sind bestrebt, die Telefon- und Datenverkehre die von ihren Anschlüssen ausgehen, innerhalb der eigenen Netze auszubilden. Neben der dadurch schnelleren Amortisierung der Netzanschaffungskosten, wird der Aufwand, den Verkehr zu den weiteren Netzbetreibern sicherzustellen, minimiert.
Dies spiegelt sich in den Marktpreisen der einzelnen Anschlußbetreiber wieder, so daß fast immer Internverkehr preisgünstiger als Netz- und/oder Netzbetreiber überschreitender Telefon- und Datenverkehr.

Der Erfindung liegt die Aufgabe zugrunde, eine Vorrichtung anzugeben, die eine Verbindung zu unterschiedlichen Kommunikationsnetzen in der Weise erzeugt, daß die erhöhten Entgelte, die fuhr den Übergang von einem Kommunikationsnetz zu einem anderen Kommunikationsnetz vermieden werden.

Erfindungsgemäß gelingt die Lösung der Aufgabe dadurch, daß in der Vorrichtung folgende Baugruppen angeordnet werden:
- Schnittstelleneinheiten zur Herstellung der Verbindung mit den Kommunikations -Endeinrichtungen,
- Schnittstelleneinheiten zur Herstellung der Verbindungen zu verschiedenen Telekommunikations-Netzanschlüssen,
- eine Steuerung, die wählbare Kommunikations-Endeinrichtungen EE mit wählbaren Telekommunikations-Netzanschlüssen in beiden Richtungen verbindet und abgehende Verbindungen zu den jeweiligen Netzanschlüssen und ankommende Verbindungen zu den jeweiligen Endeinrichtungen weiterleitet.

Eine vorteilhafte Ausgestaltung der erfindungsgemäßen Vorrichtung entsteht dadurch , daß jede Schnittstelle eine Überwachungs- und Erkennungseinheit zur Auswertung der jeweiligen Rufnummer enthält, deren Auswertesignale einer Steuer- und Schalteinheit zugeführt werden, so daß ein Telekommunikations-Netzanschluß anhand der Wahl der netzspezifischen und/oder zielbezogenen Rufnummernblöcke zugeordnet wird.

Durch die Anwendung der erfindungsgemäßen Vorrichtung spart der Anwender die Netzübergangsentgelte Festnetzanschluß zum Mobilfunkanschluß und umgekehrt. Dies gilt sowohl bei abgehenden Telefon- und Datenverkehr als auch bei ankommenden Verbindungen. Aus dem Mobilfunknetz kommende Anrufe können direkt über den Mobilfunkanschluß abgewickelt werden.
Die erfindungsgemäße Vorrichtung ermöglicht es auch Festnetzverbindungen jeweils unterschiedlichen Netzbetreibern zuzuordnen, zum Beispiel können Ortsverbindungen und Fernverbindungen über unterschiedliche Netze verschiedener Netzbetreiber abgewickelt werden, so daß jeweils die kostengünstigste Verbindung benutzt werden kann.
Die erfindungsgemäße Vorrichtung ist vorteilhaft einsetzbar, sobald mehr als ein Netz genutzt wird. Es können bestehende sowie künftige neue Netze in einfacher Weise einbezogen werden.

Die Erfindung wird im folgendem an einem Ausführungsbeispiel näher erläutert. In der zugehörigen Zeichnung zeigen:
- Figur 1:: ein Blockschaltbild der Vorrichtung
und
- Figur 2 :: eine Variante für die Anwendung mit wahlweise integrierbaren Funknetzanschlüssen.

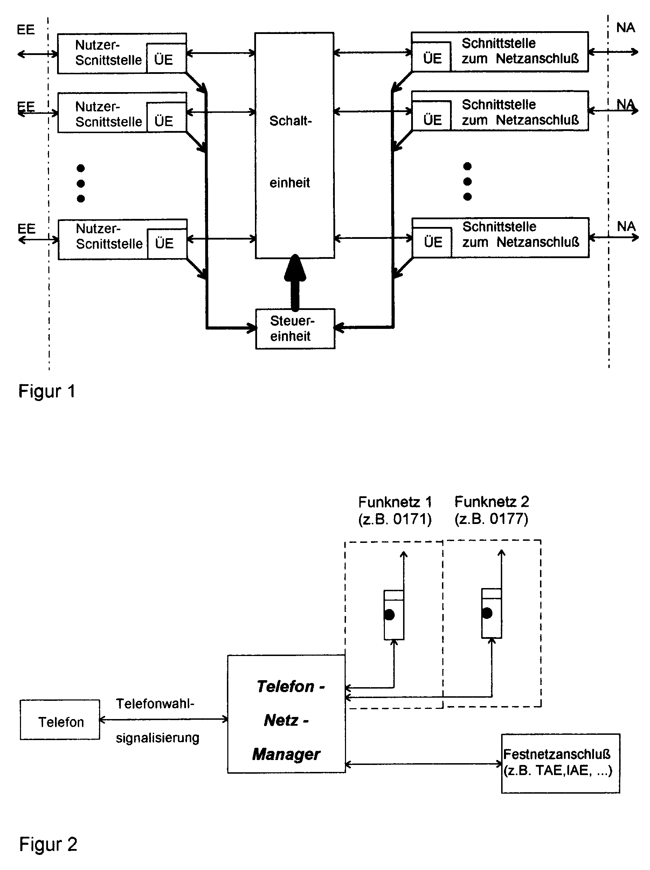

Wie aus Figur 1 ersichtlich ist, handelt es sich bei der erfindungsgemäßen Vorrichtung um eine Geräteeinheit, die verschiedene, vorhandene Kommunikations-Endeinrichtungen EE (Telefone, Faxgeräte, Computer, andere Datenendgeräte, Telefonzentralen, Telefonanlagen, usw.) an die vorhandenen Netzanschlüsse NA der verschiedenen Netzbetreiber zuschaltet. Den Kunden zugelastete erhöhte Entgelte des Netzüberganges fallen somit nicht an und können eingespart werden.

Bei einer abgehenden Verbindung überwacht die Vorrichtung die Wahlsignalisierung der Kommunikations-Endeinrichtung EE mit Hilfe einer Überwachungs- und Erkennungseinheit ÜE , welche anhand der Zielwahlnummer die netzspezifischen und/oder zielbezogenen Rufnummernblöcke erkennt und dann die Verbindung zum jeweiligen voreingestellten Netzanschluß NA mit Hilfe einer Steuereinheit und einer Schalteinheit herstellt. Die Zuordnung des Netzanschlusses zu der betreffenden Endeinrichtung EE läuft mit dem Wahlvorgang automatisch ab, ohne daß dabei die Vorrichtung selbst angewählt werden oder betätigt werden muß.

In der Umkehrrichtung werden ankommende Anrufe in analoger Weise von den verschiedenen Netzanschlüssen NA zu den zugehörigen Endeinrichtungen EE verbunden. Die ankommenden Rufe werden hierbei von den Überwachungseinheiten ÜE, die mit den Netzanschlußschnittstellen verbunden sind, ausgewertet und über die Steuer- und Schalteinheit zu den zugehörigen Endgeräten EE geschaltet. Eine ankommende Verbindung kann natürlich auch an einen weiteren Netzanschluß weitergeleitet werden.
Zum Beispiel wird beim Betrieb der Vorrichtung in Deutschland bei der Wahlsignalisierung durch die Kommunikations-Endeinrichtung 0172..... die Kommunikations-Endeinrichtung direkt mit dem vorhanden Funknetzanschluß von Mannesmann Mobilfunk verbunden.

Figur 2 erläutert eine Anwendung der Vorrichtung mit einem Festnetz- und zwei Mobilfunkanschlüssen. Die Vorrichtung erkennt den von der Endeinrichtung (hier einem Telefon) ausgehenden netzspezifischen Zielrufnummernblock (z.B. für Deutschland: 0161 -T-C-Tel, 0171 - T-D1, 0172 - Mannesmann Mobilfunk, 0177 - E-Plus,... od. die 017 fuhr T-D1, Mannesmann Mobilfunk und E-Plus) und schaltet dann zum betreffenden Mobilfunkanschluß. Beim Mobilfunk- und Festnetzanschluß eingehende Verbindungen werden zur Endeinrichtung geschaltet.
Bei integrierten Mobilnetz-Telefonen können eine oder mehrere Karten desselben oder auch verschiedener Netzbetreiber genutzt werden.
Die erfindungsgemäße Vorrichtung ermöglicht es auch Festnetzverbindungen jeweils unterschiedlichen Netzbetreibern zuzuordnen, so daß zum Beispiel Ortsverbindungen über den Netzanschluß eines lokalen Netzbetreibers, Fernverbindungen, die in Deutschland durch die vorangestellte 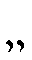 0" charakterisiert sind, über ein Weitverkehrsnetz-, einen Fernnetzanschluß oder dgl. abzuwickeln. Weiterhin können Auslandverbindungen (in Deutschland charakterisiert durch die vorangestellte 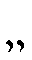 00") über einen Auslands- oder Internetanschluß durchgeführt werden.
Es müssen lediglich die Ziele durch die gewählte Telefonnummer verschiedenen Netzen zuzuordnen sein.

## Patentansprüche

1. Vorrichtung zur Herstellung der Verbindung einer Kommunikations-Endeinrichtung mit mindestens einem Telekommunikationsnetz mit:
- Schnittstelleneinheiten zur Herstellung der Verbindung mit den Kommunikations -Endeinrichtungen (EE),
- Schnittstelleneinheiten zur Herstellung der Verbindungen zu verschiedenen Telekommunikations-Netzanschlüssen (NA),
- eine Steuerung, die wählbare Kommunikations-Endeinrichtungen EE mit wählbaren Telekommunikations-Netzanschlüssen (NA) in beiden Richtungen verbindet und abgehende Verbindungen zu den jeweiligen Netzanschlüssen (NA) und ankommende Verbindungen zu den jeweiligen Endeinrichtungen (EE) weiterleitet.

2. Vorrichtung nach Anspruch 1, **dadurch gekennzeichnet**, daß sie Überwachungs- und Erkennungseinheiten (ÜE) zur Auswertung der jeweiligen Rufnummer enthält, deren Auswertesignale einer Steuer- und Schalteinheit zugeführt werden, so daß ein Telekommunikations-Netzanschluß (NA) anhand der Wahl der netzspezifischen und/oder zielbezogenen Rufnummernblöcke zugeordnet wird.
